# EUROPEAN PATENT SPECIFICATION

(11) **EP 0 943 851 B1**
(45) Date of publication and mention of the grant of the patent: **18.06.2003**
(21) Application number: 99105266.3
(22) Date of filing: 15.03.1999
(51) Int. Cl.: F16K 31/26

(54) **Float valve for accumulating water in a lavatory flush tank**
Schwimmerventil für die Speicherung von Wasser in einem Toilettenspülkasten
Clapet à flotteur pour l'accumulation d'eau dans un réservoir de chasse d'eau

(30) Priority: 20.03.1998 IT TO980247
(43) Date of publication of application: 22.09.1999
(73) Proprietor: Oliveira & Irmao S.A., 3800 Aveiro (PT)
(72) Inventor: Moura de Oliveira, Antonio Manuel, 3800 Aveiro (PT)
(74) Representative: Jorio, Paolo

(56) References cited:
- EP-A- 0 051 043
- EP-A- 0 458 401
- FR-A- 2 491 969
- US-A- 4 340 082

## Description

The present invention relates to a float valve for accumulating water in a lavatory flush tank, and comprising a valve body connected to a rigid downwardly-extending tube; a movable shutter for closing the valve; a chamber connected to the tube and containing a float movable vertically with respect to the chamber; and mechanical means for transmitting motion between the float and the shutter.

A problem with known valves of the above type is adjusting the water level corresponding to closure of the shutter, i.e. adjusting the amount of water accumulated, which involves adjusting not only the position of the chamber with respect to the valve body, but also the mechanical means for transmitting motion from the float to the shutter.

In one known valve, the rigid tube has a sector gear; the chamber moves along the tube and is locked in position by means of an elastic tongue with a tooth for engaging the gap between two teeth on the rigid tube; the mechanical means comprise a connecting rod connected in articulated manner to the float and to a transmission lever; and the connecting rod comprises two mutually sliding portions which are locked in position by further elastic retaining means.

The above known valve has the drawback of featuring two separate adjusting members, so that adjustment is a relatively painstaking job requiring the assistance of a technician capable of selecting a corresponding length of the connecting rod for each position of the chamber. Moreover, the water level is adjustable in discrete positions corresponding to the tooth pitch of the tube.

Finally, locking the chamber to the tube and the two portions of the connecting rod to each other by means of elastic tongues is difficult and unreliable. That is, being located close to the chamber, the tongues are difficult to reach with the fingers, and there is always the risk of the tooth on the tongue locking onto the top of one tooth as opposed to inside the gap between the teeth on the tube.

These drawbacks are not solved by the float valve disclosed in EP-A-458401, which comprises a manually operated member for varying the position of the chamber with respect to the valve body and wherein the adjustment of the position of the chamber correspondingly changes the configuration of the mechanical means connecting the float to the shutter, so that the configuration of the mechanical means are not maintained unchanged during adjustment.

It is an object of the invention to provide a float valve featuring a highly straightforward, reliable device for adjusting the water level, and which provides for eliminating the aforementioned drawbacks typically associated with known float valves.

According to the present invention, there is provided a float valve for accumulating water in a lavatory flush tank, as defined in enclosed claim 1.

A preferred non-limiting embodiment of the invention will be described by way of example with reference to the accompanying drawings, in which:
Figure 1 shows a side view of a lavatory float valve in accordance with the invention;
Figure 2 shows a plan view of the Figure 1 valve;
Figure 3 shows a larger-scale partial section along line III-III in Figure 2;
Figure 4 shows a larger-scale section along line IV-IV in Figure 2 in a different operating position;
Figure 5 shows an exploded partial view in perspective of the Figure 1 valve;
Figure 6 shows an exploded partial view in perspective of the water level adjusting device.

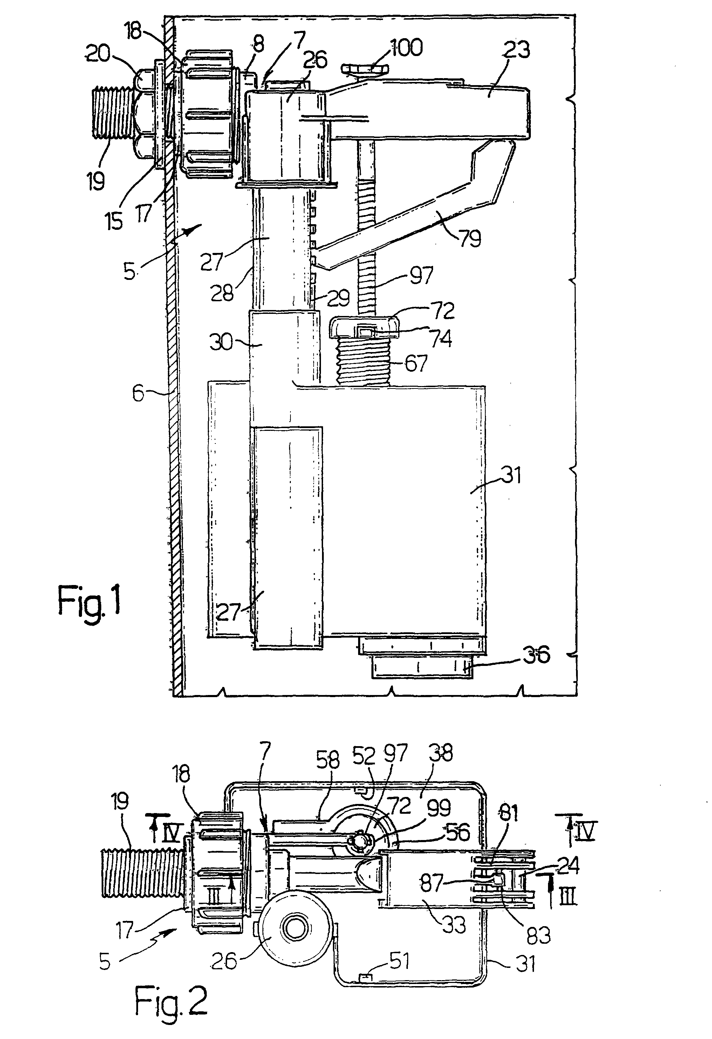

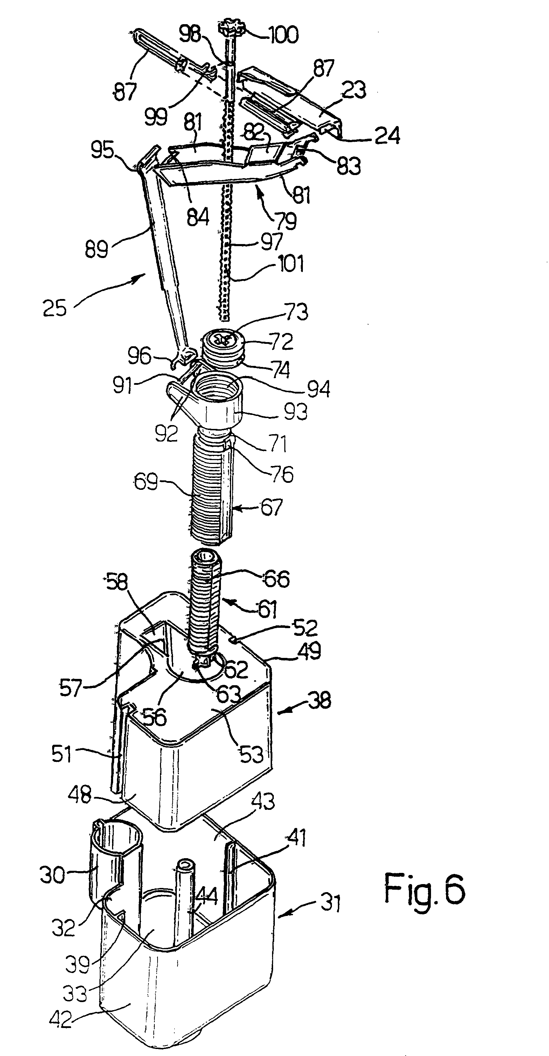

Number 5 in Figure 1 indicates as a whole a float valve for accumulating water in a lavatory flush tank 6. Valve 5 substantially comprises a valve body 7 (see also Figure 5) made of plastic material and having an externally threaded fitting 8 with a horizontal hole. Fitting 8 houses a disk 10 defining the sealing seat of valve 5; and disk 10 comprises a hole 11, and is integral with a small-section water inlet conduit 12.

Disk 10 has a sealing ring 13 for sealing a shoulder of fitting 8; and a disk seal 14 for sealing a conical seat 16 of a fitting 17 made of metal, e.g. brass, and connected to fitting 8 by means of an internally threaded ring nut 18 made of plastic material.

Fitting 17 has an externally threaded portion 19 by which valve 5 is fitted inside a hole in a vertical wall of tank 6; fitting 17 is locked by a nut 20 screwed onto portion 19 via the interposition of a washer 15; and portion 19 may be connected in known manner to the water mains.

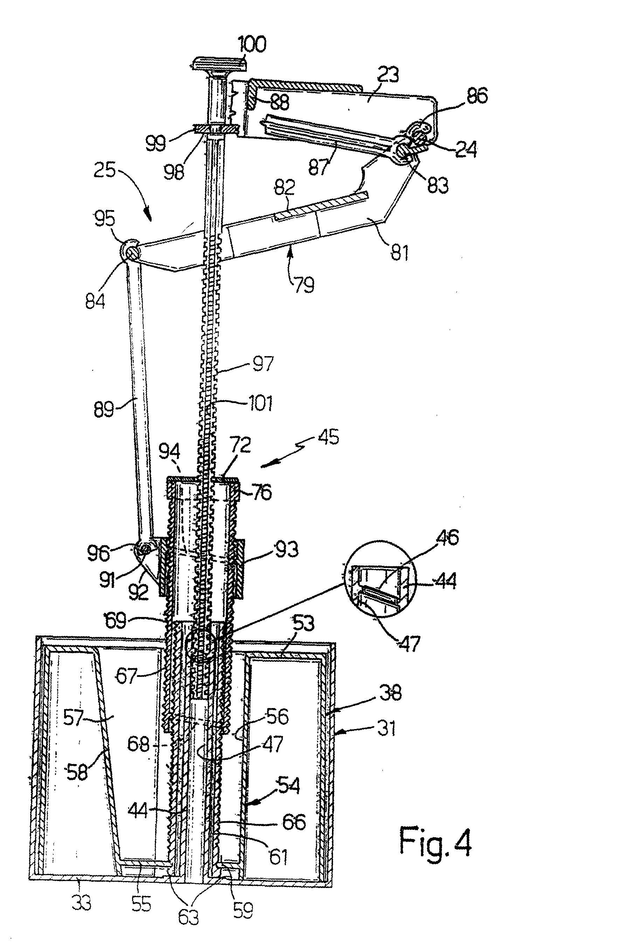

A piston 21 slides inside fitting 8 and carries a shutter defined by a plug 22 of elastomeric material for closing hole 11. Valve body 7 also comprises a horizontal arm 23 extending in the opposite direction to fitting 8 and having an upside down U-shaped section. Arm 23 comprises a horizontal bar 24, and provides for supporting mechanical means defined by a mechanism 25 (Figure 4) for activating piston 21 as described in detail later on.

Valve body 7 also comprises a vertical fitting 26 (Figures 1 and 5) fitted in known manner with a rigid tube 27, which extends downwards to reduce the free-fall height of the water into tank 6 and so reduce noise during initial fill-up of tank 6.

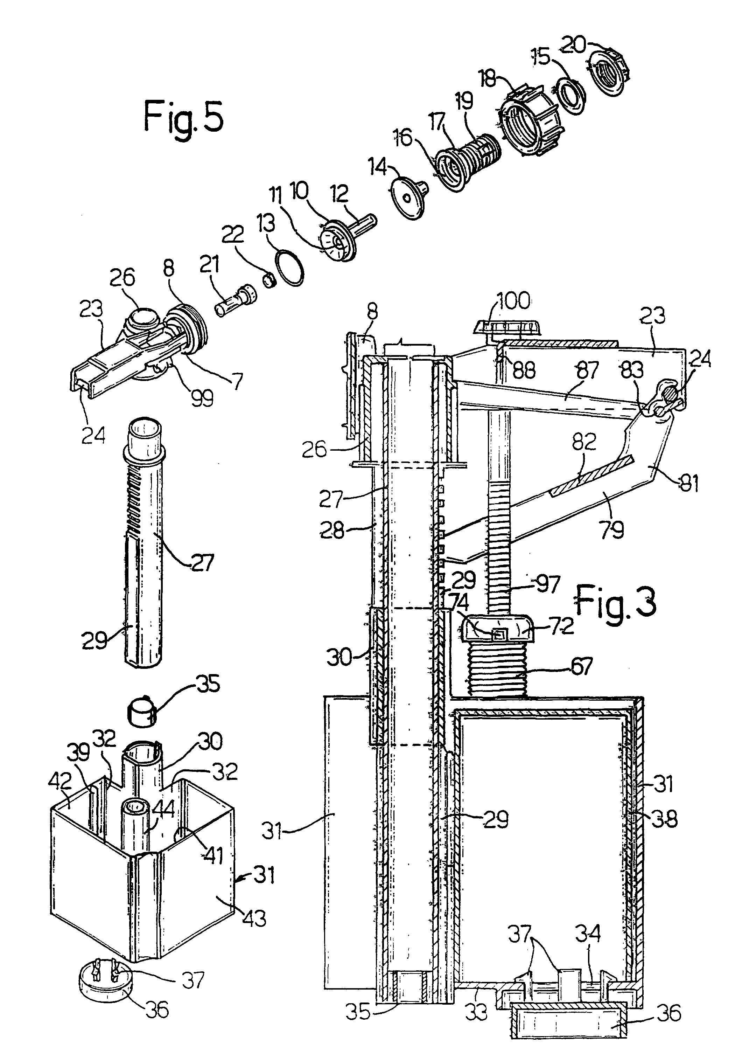

According to the invention, tube 27 (Figures 1 and 5) comprises an axial rib 28 and a prismatic sector 29, which provide for guiding tube 27 inside a sleeve 30 integral with an auxiliary chamber 31. Sleeve 30 has a section complementary to that of tube 27, and is located outside chamber 31; and a ring 35 (Figures 3 and 5) with axial ribs is inserted inside the bottom end of tube 27.

Chamber 31 is formed in one piece from plastic material, and is prismatic in shape with rounded edges and an L-shaped horizontal section (Figures 2 and 5). Sleeve 30 is integral with the two walls 32 of chamber 31 forming the angle between the two legs of the L, is therefore tangent to walls 32, and projects a given height above chamber 31.

Chamber 31 comprises a bottom wall 33 (Figure 3) having a circular opening 34, which forms a bottom valve of chamber 31 and is closed by a movable shutter 36. Shutter 36 is a float type, e.g. in the form of an open-bottomed bell, and is therefore pushed by the water into the closed position and is held inside opening 34 by elastic retaining means 37.

Chamber 31 comprises guide means for guiding a float 38 controlling shutter 22. More specifically, said guide means comprise a guide column 44 integral with bottom wall 33 (see also Figure 4); and two additional guides for float 38, which are defined by two vertical ribs 39 and 41 (Figure 5) integral with two opposite walls 42 and 43 of chamber 31.

Valve 5 comprises a device - indicated as a whole by 45 - for adjusting the water level corresponding to closure of shutter 22, and which comprises a helical rib turn 46 located at and so forming a thread at the top end of an axial cavity 47 of column 44.

Float 38 is a bell type; is defined by a one-piece box of plastic material; is prismatic in shape similar to chamber 31; has a number of vertical walls comprising a pair of opposite walls 48 and 49 having respective vertical grooves 51 and 52 for engaging ribs 39 and 41; and also comprises a top horizontal wall 53.

At column 44, wall 53 is integral with a hollow body 54 extending substantially the full height of the vertical walls of float 38, and which is closed at the bottom by a bottom wall 55 and comprises a cylindrical portion 56 (see also Figure 6) associated with a substantially prismatic portion 57. More specifically, portion 57 is substantially parallelepiped, but comprises a wall 58 at a distance from cylindrical portion 56 and diverging slightly upwards; and, at cylindrical portion 56 of body 54, wall 55 has a circular opening 59.

Water level adjusting device 45 also comprises a sleeve 61, which is guided to slide along column 44 and in turn comprises a bottom shoulder 62 which rests on the edge of opening 59, and two elastic retaining tabs 63 which click inside corresponding seats in circular opening 59 to lock sleeve 61 axially and angularly to wall 55.

Sleeve 61 has an external thread 66 which engages an internal thread of a further sleeve 67. More specifically, said internal thread is defined by a helical rib turn 68 at the bottom end of sleeve 67, which also comprises an external thread 69.

Sleeve 67 terminates at the top with a shoulder 71 on which rests a cover 72 comprising driving means defined by a cross-shaped opening 73. Cover 72 also comprises two axial slots 74 for engaging two appendixes 76 on sleeve 67; and an inner annular groove which clicks onto a corresponding rib on sleeve 67.

Mechanism 25 comprises a lever 79 defined by two lateral walls 81 connected by a cross member 82 and by two bars 83 and 84. Lever 79 is hinged, by means of two C-shaped appendixes 86, to bar 24 of horizontal arm 23 of valve body 7; bar 84 is located much further away from appendixes 86 than bar 83; and a push rod 87 is hinged to bar 83 and guided by an opening in a transverse wall 88 of arm 23, so that the free end of the push rod acts on piston 21 (Figure 5) of shutter 22.

Mechanism 25 also comprises a connecting rod 89 (Figures 4 and 6), which is normally inclined with respect to the axis of sleeves 61 and 67, is hinged at the top to bar 84 of lever 79, and is connected at the bottom in articulated manner to float 38. More specifically, connecting rod 89 is hinged at the bottom to a bar 91 carried by two parallel tabs 92 integral with a ring 93, which has an internal thread turn 94 by which to engage the external thread 69 of sleeve 67.

Connecting rod 89 is rectangular in section, is formed in one piece and therefore of constant length, and is hinged to bars 84 and 91 by means of two C-shaped appendixes 95 and 96. Mechanism 25 transmits motion between float 38 and shutter 22, and provides for a considerable reduction ratio of said motion by virtue of the difference in the distances of bars 83, 84 of lever 79 from appendixes 86.

Adjusting device 45 also comprises a single manually activated member for adjusting both the height of chamber 31 and mechanical means 25. More specifically, said member is defined by a long screw 97, which engages internal thread 46 of column 44 and is provided at the top with a groove 98 hinged to a C-shaped appendix 99 of arm 23, and with an activating knob 100 located for easy access by the user.

Screw 97 also comprises four axial grooves 101 by which to slide axially inside the cross-shaped opening 73 in cover 72. When screw 97 is rotated, grooves 101, by means of cross-shaped opening 73, rotate cover 72 and therefore also sleeve 67, which moves ring 93 axially.

Obviously, the pitch of screw 97 is equal to that of thread 46; the pitch of external thread 66 of sleeve 61 is equal to that of internal thread 68 of sleeve 67; and the pitch of external thread 69 of sleeve 67 is equal to that of thread 94 of ring 93. The thread of screw 97 and external threads 66 and 69 of sleeves 61 and 67 are such as to move ring 93 and float 38 in opposite directions.

The pitch of screw 97 advantageously equals the sum of the pitch of external thread 66 of sleeve 61 and the pitch of external thread 69 of sleeve 67, so that ring 93, at each operation, is moved by the same amount as, but in the opposite direction to, float 38. The pitch of thread 66 is preferably equal to that of thread 69 and therefore equal to half the pitch of screw 97.

Float valve 5 operates as follows.

In the Figure 1, 3 and 4 position, tank 6 is empty with float 38 in the lowered position inside chamber 31. Push rod 87 is therefore kept in the withdrawn position by mechanism 25, so that shutter 22 (Figure 5) allows the water from fitting 17 to flow in along inlet conduit 12, through hole 11 and fitting 26, and along rigid tube 27 into tank 6. When the water level reaches bottom wall 33 (Figure 3) of chamber 31, the hydrostatic thrust closes shutter 36, so that, for the time being, no water flows into chamber 31, the position of float 38 remains unchanged, and shutter 22 of valve 5 remains open.

When the water level reaches the top edge of chamber 31 (Figure 4), water overflows into chamber 31, thus trapping the air inside float 38, which therefore rises and, by means of connecting rod 89 and lever 79, moves push rod 87 rightwards, which in turn moves piston 21 rapidly to the right in Figure 5 to close shutter 22 and so cut off the inflow of water into tank 6.

Adjusting device 45 provides for adjusting the water level corresponding to closure of shutter 22, e.g. for adjusting valve 5 according to the size of tank 6, and/or for adjusting the volume of water discharged each time to flush the lavatory. Since the position of valve body 7 is fixed, this means adjusting the height of chamber 31 and therefore of float 38.

For valve 5 to operate correctly alongside a variation in the height of chamber 31, the angular position of lever 79 with respect to arm 23 (Figures 4 and 6) and that of connecting rod 89 with respect to lever 79 must remain constant, which means any upward movement of chamber 31 must be compensated by an equal downward movement of ring 93 with respect to sleeve 67.

For example, to raise the water level from the Figure 4 to the Figure 1 and 3 position, screw 97 is rotated, by means of knob 100, in the corresponding direction, and, acting on thread 46 of column 44, raises chamber 31 together with float 38 and sleeve 61. Since connecting rod 89 maintains a constant angular position of ring 93, thread 94 rotates sleeve 67 to lower ring 93. Hollow body 54 is designed to receive both ring 93 and connecting rod 89. In particular, wall 58 of prismatic portion 57 of hollow body 54 in inclined to also permit movement of connecting rod 89 to rotate lever 79.

Internal thread 68 of sleeve 67 in turn cooperates with external thread 66 of sleeve 61 to also lower sleeve 67. By virtue of the pitches of screw 97 and threads 66 and 68, the axial movement of ring 93 with respect to sleeve 61 - and therefore with respect to column 44 - determined by the movement of sleeve 67 with respect to column 44 plus the movement of ring 93 with respect to sleeve 67 equals the upward movement of chamber 31, so that the configuration of mechanism 25 remains unchanged.

The advantages, as compared with known valves, of float valve 5 according to the invention will be clear from the foregoing description. In particular, the water level is adjustable in a single operation using a single adjusting member 97 which is easily accessible and easy to operate. Moreover, adjustment may be made continuously instead of in discrete positions. And finally, during adjustment, the configuration of mechanism 25 for transmitting motion from float 38 to shutter 22 remains unchanged.

Clearly, changes may be made to the float valve as described herein without, however, departing from the scope of the accompanying Claims. For example, chamber 31 may be cylindrical or of a different prismatic shape from that described; sleeve 67 may be parallel to column 44, as opposed to coaxial, and be rotated by screw 97 via other transmission means; and the two bars 83 and 84 may be located on opposite sides of the fulcrum, as opposed to the same side.

## Claims

1. A float valve for accumulating water in a lavatory flush tank (6), and comprising a valve body (7) connected to a rigid downwardly-extending tube (27); a movable shutter (22) for cutting off the intake of water by said valve (5); a chamber (31) connected to said tube (27) and containing a float (38) movable vertically with respect to the chamber; mechanical means (25) for transmitting motion between said float (38) and said shutter (22); and an adjusting device (45) for adjusting the water level corresponding to closure of said shutter (22); said mechanical means being defined by an articulated mechanism (25) connected by an articulated joint (91) to said float (38); **characterized in that** said adjusting device (45) comprises a single member (97) activated manually to adjust both the position of said chamber (31) and the position of said joint (91) with respect to said valve body (7) and so that the configuration of said articulated mechanism (25) remains unchanged.

2. A float valve as claimed in Claim 1, **characterized in that** said articulated joint (91) connects said float (38) to a connecting rod (89) and moves with respect to said chamber (31) by means of said member (97).

3. A float valve as claimed in Claim 1 or 2, **characterized in that** said chamber (31) comprises a column (44) for guiding said float (38); said column (44) comprising an axial cavity (47); and said member being defined by a screw (97) engaging a thread (46) in said axial cavity (47).

4. A float valve as claimed in Claim 3, **characterized in that** said articulated joint (91) is carried by a threaded ring (93) engaging an external thread (69) of a first sleeve (67) rotatable by said screw (97).

5. A float valve as claimed in Claim 4, **characterized in that** said first sleeve (67) comprises driving means (73) rotatable by said screw (97).

6. A float valve as claimed in Claim 5, **characterized in that** said driving means comprise a cross-shaped opening (73) formed in a cover (72) of said first sleeve (67); said screw (97) having axial grooves (101) for engaging said cross-shaped opening (73) to rotate said first sleeve (67).

7. A float valve as claimed in one of Claims 4 to 6, **characterized in that** said first sleeve (67) also comprises an internal thread (68) engaging an external thread (66) of a second sleeve (61) fitted to said chamber (31) and coaxial with said column (44).

8. A float valve as claimed in Claim 7, **characterized in that** the external thread (69) of said first sleeve (67) and the external thread (66) of said second sleeve (61) have pitches, the sum of which equals the pitch of said screw (97).

9. A float valve as claimed in Claim 8, **characterized in that** said external threads (69, 66) have the same pitch.

10. A float valve as claimed in one of Claims 3 to 9, **characterized in that** said screw (97) has an annular groove (98) by which to rotate in a fixed annular seat (99), and comprises an activating knob (100) at the top.

11. A float valve as claimed in one of Claims 3 to 10, wherein said tube (27) slides inside a guide sleeve (30) located outside said chamber (31); **characterized in that** said chamber (31) comprises two walls (32) tangent to said guide sleeve (30).

12. A float valve as claimed in Claim 11, **characterized in that** said chamber (31) is prismatic in shape with an L-shaped section; said walls (32) being located at the angle of said L-shaped section.

13. A float valve as claimed in Claim 12, wherein said float (38) is a bell type; **characterized in that** said float is similar in shape to said chamber (31); said chamber (31) and said float (38) each having a pair of opposite walls (42, 43; 48, 49) having additional guides (39, 41; 51, 52) for guiding said float.

14. A float valve as claimed in Claim 13, **characterized in that** said float (38) comprises a hollow body (54) closed at the bottom and in turn comprising a cylindrical portion (56) for housing said sleeves (61, 67), and a substantially prismatic portion (57) permitting the passage of said articulated joint (91).

15. A float valve as claimed in Claims 4 and 14, **characterized in that** said substantially prismatic portion (57) has an inclined wall (58) for also permitting movement of said connecting rod (89).

## Patentansprüche

1. Schwimmerventil für die Speicherung bzw. ein Sammeln von Wasser in einem Toilettenspülkasten (6), und umfassend einen Ventilkörper (7), der mit einem starren, sich nach unten erstreckenden Rohr (27) verbunden ist; einen bewegbaren Verschluß (22), um den Eintrag bzw. die Aufnahme von Wasser durch das Ventil (5) zu unterbrechen bzw. abzusperren; eine Kammer (31), die mit dem Rohr (27) verbunden ist und enthaltend einen Schwimmer (38), der vertikal in bezug auf die Kammer bewegbar ist; mechanische Mittel (25) zum Übertragen einer Bewegung zwischen dem Schwimmer (38) und dem Verschluß (22); und eine Einstellvorrichtung (45) zum Einstellen des Wasserniveaus entsprechend einem Verschließen des Verschlusses (22); wobei die mechanischen Mittel durch einen Gelenkmechanismus (25) definiert sind, die durch eine gelenkige Verbindung (91) an dem Schwimmer (38) festgelegt sind; **dadurch gekennzeichnet, daß** die Einstellvorrichtung (45) ein einziges Glied (97) umfaßt, das händisch aktiviert bzw. betätigt wird, um sowohl die Position der Kammer (31) als auch die Position der Verbindung (91) in bezug auf den Ventilkörper (7) und derart einzustellen, daß die Konfiguration des Gelenkmechanismus (25) unverändert bleibt.

2. Schwimmerventil nach Anspruch 1, **dadurch gekennzeichnet, daß** die gelenkige bzw. Gelenkverbindung (91) den Schwimmer (38) mit einer Verbindungsstange (89) verbindet und sich in bezug auf die Kammer (31) mittels des Glieds (97) bewegt.

3. Schwimmerventil nach Anspruch 1 oder 2, **dadurch gekennzeichnet, daß** die Kammer (31) eine Säule (44) zum Führen des Schwimmers (38) umfaßt; wobei die Säule (44) eine axiale Ausnehmung bzw. einen axialen Hohlraum (47) umfaßt; und wobei das Glied durch eine Schraube (97) definiert ist, die in ein Gewinde (46) in dem axialen Hohlraum (47) eingreift.

4. Schwimmerventil nach Anspruch 3, **dadurch gekennzeichnet, daß** die Gelenkverbindung (91) durch einen Gewindering (93) getragen ist, der in ein Außengewinde (69) einer ersten Hülse (67), die durch die Schraube (97) drehbar ist, eingreift.

5. Schwimmerventil nach Anspruch 4, **dadurch gekennzeichnet, daß** die erste Hülse (67) Antriebsmittel (73) umfaßt, die durch die Schraube (97) drehbar sind.

6. Schwimmerventil nach Anspruch 5, **dadurch gekennzeichnet, daß** die Antriebsmittel eine kreuzförmige Öffnung (73), die in einer Abdeckung (72) der ersten Hülse (67) ausgebildet ist, umfassen; wobei die Schraube (97) axiale Nuten (101) zum Ergreifen der kreuzförmigen Öffnung (73) aufweist, um die erste Hülse (67) zu drehen.

7. Schwimmerventil nach einem der Ansprüche 4 bis 6, **dadurch gekennzeichnet, daß** die erste Hülse (67) auch ein Innengewinde (68) umfaßt, das in ein Außengewinde (66) einer zweiten Hülse (61) eingreift, die an die Kammer (31) und koaxial mit der Säule (44) angepaßt ist.

8. Schwimmerventil nach Anspruch 7, **dadurch gekennzeichnet, daß** das Außengewinde (69) der ersten Hülse (67) und das Außengewinde (66) der zweiten Hülse (61) Ganghöhen besitzen, deren Summe gleich der Ganghöhe der Schraube (97) ist.

9. Schwimmerventil nach Anspruch 8, **dadurch gekennzeichnet, daß** die Außengewinde (69, 66) die gleiche Ganghöhe besitzen.

10. Schwimmerventil nach einem der Ansprüche 3 bis 9, **dadurch gekennzeichnet, daß** die Schraube (97) eine ringförmige Rille bzw. Nut (98) umfaßt, durch welche sie in einem feststehenden, ringförmigen Sitz (99) zu rotieren ist, und einen Aktivierungs- bzw. Betätigungsknopf (100) an der Oberseite umfaßt.

11. Schwimmerventil nach einem der Ansprüche 3 bis 10, worin das Rohr (27) im Inneren einer Führungshülse (30) gleitet, die an der Außenseite der Kammer (31) angeordnet ist; **dadurch gekennzeichnet, daß** die Kammer (31) zwei Wände (32) umfaßt, die tangential zu der Führungshülse (30) liegen.

12. Schwimmerventil nach Anspruch 11, **dadurch gekennzeichnet, daß** die Kammer (31) prismatisch in der Form mit einem L-förmigen Querschnitt ist; wobei die Wände (32) an dem Winkel des L-förmigen Querschnitts angeordnet sind.

13. Schwimmerventil nach Anspruch 12, worin der Schwimmer (38) eine Kugelart ist; **dadurch gekennzeichnet, daß** der Schwimmer ähnlich in der Form der Kammer (31) ist; wobei die Kammer (31) und der Schwimmer (38) jeweils ein Paar von einander gegenüberliegenden Wänden (42, 43; 48, 49) aufweisen, die zusätzliche Führungen (39, 41; 51, 52) zum Führen des Schwimmers aufweisen.

14. Schwimmerventil nach Anspruch 13, **dadurch gekennzeichnet, daß** der Schwimmer (38) einen Hohlkörper (54) umfaßt, der an dem Boden geschlossen ist und wiederum einen zylindrischen Bereich (56) zum Aufnehmen der Hülsen (61, 67) und einen im wesentlichen prismatischen Bereich (57) aufweist, der den Durchgang der Gelenkverbindung (91) erlaubt.

15. Schwimmerventil nach Anspruch 4 und 14, **dadurch gekennzeichnet, daß** der im wesentlichen prismatische Bereich (57) eine geneigte Wand (58) aufweist, um auch eine Bewegung der Verbindungsstange (89) zu erlauben.

## Revendications

1. Clapet à flotteur pour accumuler de l'eau dans un réservoir de chasse d'eau (6), et comportant un corps de clapet (7) connecté à un tube rigide s'étendant vers le bas (27), un obturateur mobile (22) pour interrompre l'admission d'eau par ledit clapet (5), une chambre (31) connectée audit tube (27) et contenant un flotteur (38) mobile verticalement par rapport à la chambre, des moyens mécaniques (25) pour transmettre un mouvement entre ledit flotteur (38) et ledit obturateur (22), et un dispositif d'ajustement (45) pour ajuster le niveau d'eau correspondant à la fermeture dudit obturateur (22), lesdits moyens mécaniques étant définis par un mécanisme articulé (25) connecté par une liaison articulée (91) audit flotteur (38), **caractérisé en ce que** ledit dispositif d'ajustement (45) comporte un élément unique (97) actionné manuellement pour ajuster la position de ladite chambre (31) et la position de ladite liaison (91) par rapport audit corps de clapet (7), et de sorte que la configuration dudit mécanisme articulé (25) reste inchangée.

2. Clapet à flotteur selon la revendication 1, **caractérisé en ce que** ladite liaison articulée (91) connecte ledit flotteur (38) à une tige de connexion (89), et se déplace par rapport à ladite chambre (31) par l'intermédiaire dudit élément (97).

3. Clapet à flotteur selon la revendication 1 ou 2, **caractérisé en ce que** ladite chambre (31) comporte une colonne (44) pour guider ledit flotteur (38), ladite colonne (44) comportant une cavité axiale (47), et ledit élément étant défini par une vis (97) venant en prise avec un filet (46) situé dans ladite cavité axiale (47).

4. Clapet à flotteur selon la revendication 3, **caractérisé en ce que** ladite liaison articulée (91) est portée par un anneau fileté (93) venant en prise avec un filet extérieur (69) d'un premier manchon (67) pouvant tourner par l'intermédiaire de ladite vis (97).

5. Clapet à flotteur selon la revendication 4, **caractérisé en ce que** ledit premier manchon (67) comporte des moyens d'entraînement (73) pouvant être entraînés en rotation par ladite vis (97).

6. Clapet à flotteur selon la revendication 5, **caractérisé en ce que** lesdits moyens d'entraînement comportent une ouverture en forme de croix (73) formée dans un recouvrement (72) dudit premier manchon (67), ladite vis (97) ayant des gorges axiales (101) pour venir en prise avec ladite ouverture en forme de croix (73) afin de faire tourner ledit premier manchon (67).

7. Clapet à flotteur selon l'une quelconque des revendications 4 à 6, **caractérisé en ce que** ledit premier manchon (67) comporte également un filet intérieur (68) venant en prise avec un filet extérieur (66) d'un second manchon (61) agencé sur ladite chambre (31), et coaxial par rapport à ladite colonne (44).

8. Clapet à flotteur selon la revendication 7, **caractérisé en ce que** le filet extérieur (69) dudit premier manchon (67) et le filet extérieur (66) dudit second manchon (61) ont des pas, dont la somme est égale au pas de ladite vis (97).

9. Clapet à flotteur selon la revendication 8, **caractérisé en ce que** lesdits filets extérieurs (69, 66) ont le même pas.

10. Clapet à flotteur selon l'une quelconque des revendications 3 à 9, **caractérisé en ce que** ladite vis (97) a une gorge annulaire (98) par l'intermédiaire de laquelle elle peut tourner dans un siège annulaire fixe (99), et comporte un bouton d'actionnement (100) au niveau de la partie supérieure.

11. Clapet à flotteur selon l'une quelconque des revendications 3 à 10, dans lequel ledit tube (27) coulisse à l'intérieur d'un manchon de guidage (30) positionné à l'extérieur de ladite chambre (31), **caractérisé en ce que** ladite chambre (31) comporte deux parois (32) tangentes audit manchon de guidage (30).

12. Clapet à flotteur selon la revendication 11, **caractérisé en ce que** ladite chambre (31) a une forme prismatique ayant une section en forme de L, lesdites parois (32) étant positionnées au niveau de l'angle de ladite section en forme de L.

13. Clapet à flotteur selon la revendication 12, dans lequel ledit flotteur (38) est un flotteur de type cloche, **caractérisé en ce que** ledit flotteur a une forme similaire à ladite chambre (31), ladite chambre (31) et ledit flotteur (38) ayant chacun une paire de parois opposées (42, 43 ; 48, 49) ayant des guides supplémentaires (39, 41 ; 51, 52) pour guider ledit flotteur.

14. Clapet à flotteur selon la revendication 13, **caractérisé en ce que** ledit flotteur (38) comporte un corps creux (54) fermé au niveau de la partie inférieure, et comportant à son tour une partie cylindrique (56) pour recevoir lesdits manchons (61, 67), et une partie sensiblement prismatique (57) permettant le passage de ladite liaison articulée (91).

15. Clapet à flotteur selon les revendications 4 et 14, **caractérisé en ce que** ladite partie sensiblement prismatique (57) a une paroi inclinée (58) pour permettre également un déplacement de ladite tige de connexion (89).
